Europäisches Patentamt

European Patent Office

Office européen des brevets

(11) Veröffentlichungsnummer: **0 272 436 B1**

## EUROPÄISCHE PATENTSCHRIFT

(45) Veröffentlichungstag der Patentschrift: **04.03.92**

(51) Int. Cl.⁵: **H04M 1/02**

(21) Anmeldenummer: **87116689.8**

(22) Anmeldetag: **12.11.87**

(54) **Tisch- und Wandfernsprechapparat.**

(30) Priorität: **20.12.86 DE 3643827**

(43) Veröffentlichungstag der Anmeldung:
**29.06.88 Patentblatt 88/26**

(45) Bekanntmachung des Hinweises auf die
Patenterteilung:
**04.03.92 Patentblatt 92/10**

(84) Benannte Vertragsstaaten:
**AT BE CH ES FR GB IT LI LU NL SE**

(56) Entgegenhaltungen:
**EP-A- 0 203 476**
**GB-A- 2 105 946**

**TECHNICAL DIGEST WESTERN ELECTRIC, Nr.
73, Januar 1984, Seiten 9-10, New York, US;
J.M. GOTWAY et al.: "Reversible hook for
desk/wall convertible telephone sets"**

**PATENT ABSTRACTS OF JAPAN, Band 9, Nr.
302 (E-362)[2025], 29. November 1985; & JP-
A-60 140 963**

**PATENT ABSTRACTS OF JAPAN, Band 9, Nr.
274 (E-354)[1997], 31. Okfober 1985; & JP-
A-60 117 856**

(73) Patentinhaber: **TELENORMA GMBH
Mainzer Landstrasse 128-146
W-6000 Frankfurt/Main(DE)**

(72) Erfinder: **Klotzbach, Klaus
Kullmannstrasse 5
W-6000 Frankfurt/M. 50(DE)**
Erfinder: **Girscher, Wolfgang
Woogstrasse 27
W-6000 Frankfurt/Main(DE)**
Erfinder: **Von Reyer, Hayo
Höhenweg 22
W-6350 Bad Nauheim(DE)**
Erfinder: **Mayer, Helmut R., Dipl.-Designer
Höhenweg 22
W-6350 Bad Nauheim(DE)**

# Beschreibung

Die Erfindung betrifft einen Tisch- und Wandfernsprechapparat mit einem in Längsrichtung aufliegenden Handapparat, wobei der Tischapparat um 180° gedreht an der Wand befestigt wird und die Wählvorrichtung bei dem Wandapparat um 180° gegenüber dem Tischapparat verdreht eingebaut ist.

Ein derartiger Tisch- und Wandfernsprechapparat ist bereits bekannt. So wird in der DE-A-26 36 848 eine Anordnung zur Verwendung eines Fernsprechtischapparates als Fernsprechwandapparat beschrieben, bei welcher der Tischapparat um 180° verdreht an der Wand als Wandapparat befestigt wird und der Handapparat durch ein Formteil, welches auch zur Befestigung des Apparategehäuse an der Wand dient, in der Ruhelage gehalten wird. Die als Wählscheibe ausgebildete Wählvorrichtung ist zu diesem Zweck ebenfalls um 180° zu drehen.

Die Aufgabe der Erfindung besteht nun darin, einen Tisch- und Wandfernsprechapparat anzugeben, bei welchem die Wählvorrichtung als Wähltastatur ausgebildet ist.

Diese Aufgabe wird dadurch gelöst, daß der Handapparat unterhalb der Hörkapsel eine Aufhängevorrichtung aufweist und daß der Handapparat über der als Wählvorrichtung ausgebildeten Wähltastatur liegt, welche durch einen Schieber arretiert wird, wobei der Schieber in den Tastenblock der Wähltastatur in der Wandlage derart einrastet, daß der Schieber für den Eingriff in die Aufhängevorrichtung hervorsteht, während in der Tischlage der Schieber bündig mit dem Apparategehäuse abschließt.

Ein Handapparat mit einer Aufhängevorrichtung und zwar für einen Tisch- oder Wandapparat ist bereits bekannt. So wird in der DE-C-32 10 111 ein Handapparat beschrieben, bei welchen ein nach unten geöffneter Haken zwischen dem Griff und der Hörmuschel angebracht ist, welcher in den Gabelumschalter einhängbar ist. Bei dem bekannten Tisch- und Wandapparat erfolgt jedoch keine Verdrehung um 180°, um den Fernsprechapparat als Wandapparat zu benutzen.

Eine Weiterbildung der Erfindung besteht darin, daß die Aufhängevorrichtung als waagerechter Schlitz am Auslauf der Griffmulde unterhalb des die Hörkapsel umfassenden Teils des Handapparats ausgebildet ist.

Eine Weiterbildung der Erfindung besteht auch darin, daß der Schieber eine Nase aufweist, welche in der Wandlage in den Schlitz des Handapparats eingreift.

Der Schieber hat zum einen die Aufgabe, den herausnehmbaren Tastwahlblock in jeder der beiden Lagen zu arretieren und ist gleichzeitig derart ausgebildet, daß dessen Nase in der Wandlage des Fernsprechapparates hervorsteht, so daß der Handapparat mit seinem Schlitz daran aufgehängt werden kann.

Die Aufgabe wird auch dadurch gelöst, daß der Handapparat unterhalb der Hörkapsel eine Aufhängevorrichtung aufweist und daß der Handapparat über der als Wählvorrichtung ausgebildeten Wähltastatur liegt, welche durch einen ersten Schnappeinsatz oder einen zweiten Schnappeinsatz arretierbar ist, wobei die Oberseite des ersten Schnappeinsatzes bündig mit der Oberseite des Apparategehäuses abschließt, während der zweite Schnappeinsatz eine Nase aufweist, welche in den Schlitz des Handapparates eingereift.

Anstelle des Schiebers kann auch ein Schnappeinsatz treten.

In der EP-A-0 203 476 ist ein Fernsprechgerät für Tisch- und Wandbetrieb beschrieben, bei welchem ein Füllkörper derart befestigbar ist, daß der Teilnehmer selbst auf einfache Weise das Fernsprechgerät auf die beiden Betriebslagen umrüsten kann. Zu diesem Zweck ist im Bereich der Ablagemulde zumindest ein frei zugänglicher Ausschnitt vorgesehen, in den der Füllkörper in zwei Gebrauchslagen eindrückbar und mittels einer Rastverbindung gehalten ist. Dabei überragt eine einstückig mit dem Füllkörper verbundene Nase die Konturen der Ablagemulde, so daß bei der Verwendung als Wandgerät der Handapparat sicher in der Ruhelage gehalten wird.

In dem Patent Abstracts OF Japan, Band 9, Nr. 302 vom 29. Nov. 1985 wird unter der Nummer JP-A 60140963 ist ein Fernsprechapparat als Tisch- und Wandapparat beschrieben, bei welchem ein Befestigungsteil in eine erste Öffnung und um 180 Grad gedreht in eine zweite Öffnung einsetzbar ist, so daß die am Befestigungsteil angebracht Nase in der einen Lage in die Ablagemulde hineinragt und auf diese Weise eine Aufhängevorrichtung für den mit einem Schlitz versehenen Handapparat bildet.

Der bekannt Füllkörper und das bekannte Einsatzteil werden durch eine Rastverbindung in der jeweiligen Lage gehalten.

Weitere Vorteile ergeben sich aus den Unteransprüchen.

Die Erfindung wird anhand eines Ausführungsbeispiels näher erläutert, welches in der Zeichnung dargestellt ist.

Es zeigt:

Fig. 1a den Fernsprechapparat in der Tischlage,
Fig. 1b den Fernsprechapparat in der Wandlage,
Fig. 2 den Schieber in der Tischlage,
Fig. 3 den Schieber in der Wandlage,
Fig. 4 den Handapparat und
Fig. 5 zwei Ausführungsformen von Schnappeinsätzen.

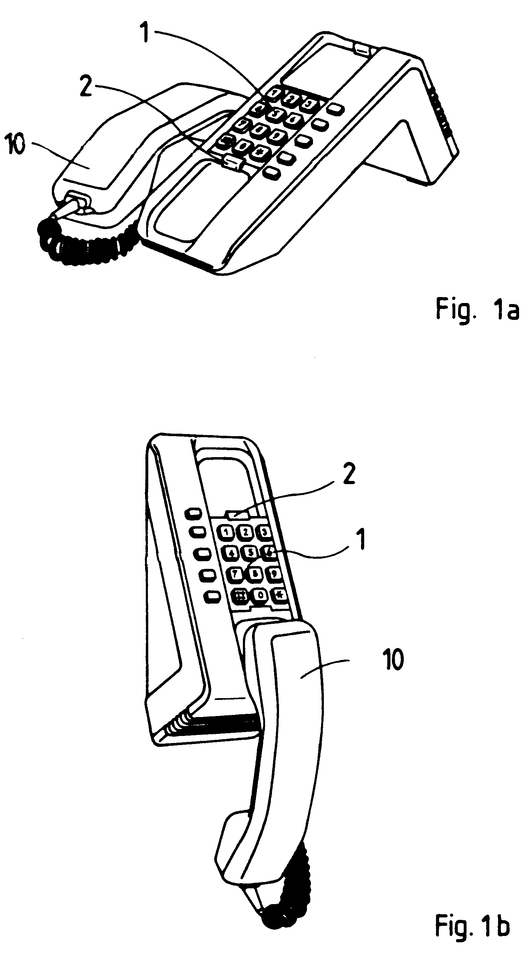

In der Tischlage des Fernsprechapparates (siehe Fig. 1a) ist der Tastwahlblock 1 derart eingesetzt, daß der Schieber 2 in der Nähe der Zifferntaste "Null" sitzt. In der Wandlage ist der Fernsprechapparat um 180° gedreht, so daß auch der umzudrehende Tastwahlblock 1 derart eingesetzt ist, daß der Schieber 2 sich in der Nähe der Zifferntaste "Zwei" befindet.

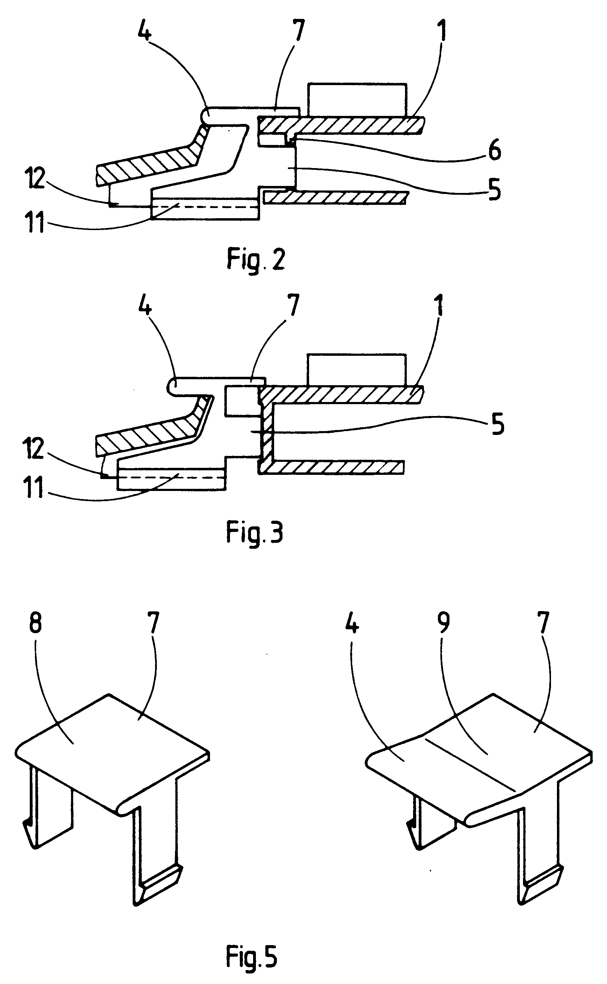

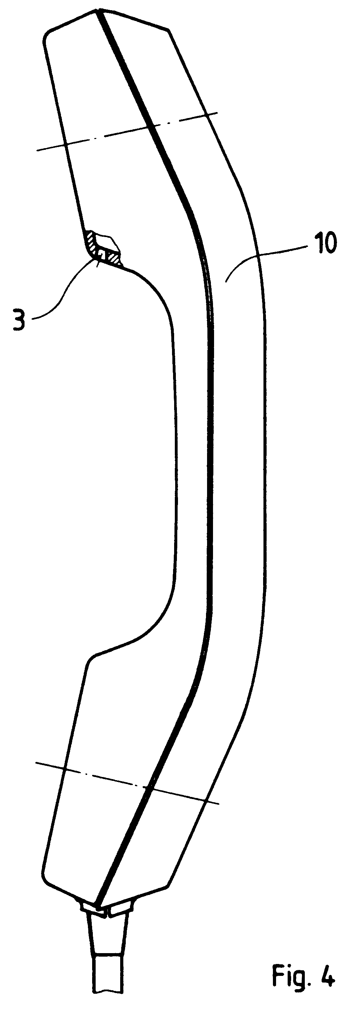

Der Schieber 2 (siehe Fig. 2 und Fig. 3) weist eine beiderseitige Führung 11 auf, welche diesen auf der Gleitbahn 12 hin- und herschieben läßt. Die Nase 5 des Schiebers greift in der Tischlage in eine Öffnung 6 ein, so daß die Nase 4 bündig mit der Oberseite des Fernsprechapparategehäuses abschließt. Die Nase 7 hält den Tastwahlblock 1. In der Wandlage ist die Öffnung 6 nicht vorhanden, so daß der Vorsprung 5 nicht in den Tastwahlblock 1 hineinragen kann. Die Nase 7 ist jedoch derart ausgebildet, daß der Tastwahlblock 1 auch in dieser Position des Schiebers gehalten wird. Die Nase 4 steht über die Oberseite des Apparategehäuses hinaus. Der Schieber ist so weit gegen die Innenseite des Apparategehäuses verschiebbar, daß die Nase 7 den Tastwahlblock frei gibt, so daß dieser herausgenommen werden kann. Der Schieber kann in den beiden Positionen gemäß Fig. 2 und Fig. 3 durch eine nicht gezeigte Rastvorrichtung zusätzlich gehalten werden.

Der in Fig. 4 gezeigte Handapparat weist einen quer zur Längsrichtung des Handapparates 10 ausgebildeten Schlitz 3 auf, in welchen die die Nase 4 des Schiebers 2 in der Wandlage paßt und auf diese Weise den Handapparat am Fernsprechapparat hält.

Anstelle des Schiebers kann auch ein Schnappeinsatz verwendet werden und zwar in zwei verschiedenen Ausführungen. Die eine Ausführung ist derart ausgebildet, daß diese wie der Schieber gemäß Fig. 2 bündig mit der Oberseite des Apparategehäuses abschließt, während die Wandausführung die bereits beschriebene Nase 4 aufweist. Beide Ausführungen können mit der bereits beschriebenen Nase 7 versehen sein, welche den Tastwahlblock 1 hält. Auf diese Nase 7 kann jedoch auch verzichtet werden, wobei der Tastwahlblock 1 durch eine nicht gezeigte Schraub- bzw. Rastverbindung in den beiden Positionen gehalten wird, wobei die Schraube durch die Schnappeinsätze verdeckt wird.

## Patentansprüche

1. Tisch- und Wandfernsprechapparat mit einem in Längsrichtung aufliegenden Handapparat, wobei der Tischapparat um 180° gedreht an der Wand befestigt wird und die Wählvorrichtung bei dem Wandapparat um 180° gegenüber dem Tischapparat verdreht eingebaut ist, dadurch gekennzeichnet,

daß der Handapparat (10) unterhalb der Hörkapsel eine Aufhängevorrichtung (3) aufweist und daß der Handapparat (10) über der als Wählvorrichtung ausgebildeten Wähltastatur liegt, welche durch einen Schieber (2) arretiert wird, wobei der Schieber (2) in den Tastenblock der Wähltastatur in der Wandlage derart einrastet, daß der Schieber (2) für den Eingriff in die Aufhängevorrichtung hervorsteht, während in der Tischlage der Schieber bündig mit dem Apparategehäuse abschließt.

2. Tisch- und Wandfernsprechapparat nach Anspruch 1,
dadurch gekennzeichnet,
daß die Aufhängevorrichtung als waagerechter Schlitz (3) am Auslauf der Griffmulde unterhalb des die Hörkapsel umfassenden Teils des Handapparats (10) ausgebildet ist.

3. Tisch- und Wandfernsprechapparat nach Anspruch 1 oder 2,
dadurch gekennzeichnet,
daß der Schieber (2) eine Nase (4) aufweist, welche in der Wandlage in den Schlitz (3) des Handapparates (10) eingreift.

4. Tisch- und Wandfernsprechapparat nach einem der Ansprüche 1 bis 3,
dadurch gekennzeichnet,
daß der Schieber (2) einen Vorsprung (5) aufweist, welcher in der Tischlage in eine Öffnung (6) des Tastwahlblocks (1) hineinragt, während auf der gegenüberliegenden Seite des Tastwahlblocks (1) die Öffnung verschlossen ist.

5. Tisch- und Wandfernsprechapapparat nach einem der Ansprüche 1 bis 4,
dadurch gekennzeichnet,
daß der Schieber (2) eine Nase (7) aufweist, welche in beiden Lagen des Schiebers (2) über die Oberseite des Tastenblocks (1) greift.

6. Tisch- und Fernsprechapparat mit einem in Längsrichtung aufliegenden Handapparat, wobei der Tischapparat um 180 Grad gedreht an der Wand befestigt wird und die Wählvorrichtung bei dem Wandapparat um 180 Grad gegenüber dem Tischapparat verdreht eingebaut ist,
**dadurch gekennzeichnet,**
daß der Handapparat (10) unterhalb der Hörkapsel eine Aufhängevorrichtung (3) aufweist und daß der Handapparat (10) über der als Wählvorrichtung ausgebildeten Wähltastatur liegt, welche durch einen ersten Schnappeinsatz (8) oder einen zweiten Schnappeinsatz (9) arretierbar ist, wobei die Oberseite des ersten Schnappeinsatzes (8) bündig mit der Oberseite des Apparategehäuses abschließt, während der zweite Schnappeinsatz (9) eine Nase (4) aufweist, welche in den Schlitz (3) des Handapparates (10) eingreift.

7. Tisch- und Wandfernsprechapparat nach Anspruch 6,
   **dadurch gekennzeichnet,**
   daß der erste (8) und der zweite (9) Schnappeinsatz eine Nase (7) aufweist, welche über die Oberseite des Tastwahlblocks (1) greift.

## Claims

1. Table and wall telephone apparatus with a handpiece placed on in length direction, wherein the table apparatus is fastened to the wall turned through 180° and the dialling device in the case of the wall apparatus is incorporated turned through 180° relative to the table apparatus, characterised thereby that the handpiece (10) has a suspension device (3) under the listening capsule and that the handpiece (10) is placed above the dialling device, which is constructed as a dialling keyboard and which is located by a slide (2), wherein the wall position the slide (2) detents in the key block of the dialling keyboard in the manner that the slide (2) stands proud for engagement in the suspension device, while in the table position the slide closes off flush with the apparatus housing.

2. Table and wall telephone apparatus according to claim 1, characterised thereby, that the suspension device is constructed as a horizontal slot (3) at the run-out of the grip trough below the part of the handpiece (10) embracing the listening capsule.

3. Table and wall telephone apparatus according to claim 1 or 2, characterised thereby that the slide (2) has a nose (4) which in the wall position egages into the slot (3) of the handpiece (10).

4. Table and wall telephone apparatus according to one of the claims 1 to 3, characterised thereby that the slide (3) has a projection (5) which in the table position projects into an opening (6) of the key dialling block (1), while on the opposite side of the key dialling block (1) the opening is closed.

5. Table and wall telephone apparatus according to one of the claims 1 to 4, characterised thereby that the slide (2) has a nose (7) which in both positions of the slide (2) engages over the upper side of the key block (1).

6. Table and wall telephone apparatus with a handpiece placed on in length direction, wherein the table apparatus is fastened to the wall turned through 180° and the dialling device in the case of the wall apparatus is incorporated turned through 180° relative to the table apparatus, characterised thereby that the handpiece (10) has a suspension device (3) under the listening capsule and that the handpiece (10) is placed above the dialling device, which is constructed as a dialling keyboard and which is locatable through a first snap-action insert (8) or a second snap-action insert (9), wherein the upper side of the first snap-action insert (8) closes off flush with the upper side of the apparatus housing, while the second snap-action insert (9) has a nose (4) which engages into the slot (3) of the handpiece (10).

7. Table and wall telephone apparatus according to claim 6, characterised thereby that the first (8) and the second (9) snap-action insert has a nose (7) which engages over the upper side of the key dialling block (1).

## Revendications

1. Poste téléphonique mural et de table comportant un combiné posé dans la direction longitudinale, l'appareil de table pouvant être pivoté de 180° et fixé au mur, et le dispositif de sélection de l'appareil mural étant monté en étant pivoté de 180° par rapport à l'appareil de table, caractérisé en ce que
   le combiné (10) comporte, au-dessous du récepteur, un dispositif de suspension (3) et que le combiné (10) est situé au-dessus du clavier de sélection constituant le dispositif de sélection et qui est bloqué par un poussoir (2), qui s'encliquette dans le bloc à touches du clavier de sélection, dans la position murale, de sorte que le poussoir (2) fait saillie pour son engagement dans le dispositif de suspension, tandis que dans la position dans laquelle l'appareil est posé sur une table, le poussoir se termine de niveau avec le boîtier de l'appareil.

2. Poste téléphonique mural et de table selon la revendication 1, caractérisé en ce que le dispositif de suspension est réalisé sous la forme d'une fente horizontale (3) à l'extrémité de sortie de la cavité de préhension au-dessous de la partie du combiné (10), qui entoure le récepteur.

3. Poste téléphonique mural et de table selon la revendication 1 ou 2, caractérisé en ce que le poussoir (2) comporte un bec (4), qui, dans la position murale, s'engage dans la fente (3) du combiné (10).

4. Poste téléphonique mural et de table selon l'une des revendications 1 à 3, caractérisé en ce que le poussoir (2) possède une partie saillante (5) qui, dans le cas où l'appareil est posé sur une table, pénètre dans une ouverture (6) du bloc de sélection à touches (1), tout en fermant l'ouverture située sur le côté opposé du bloc de sélection à touches (1).

5. Poste téléphonique mural et de table selon l'une des revendications 1 à 4, caractérisé en ce que le poussoir (2) possède un bec (7) qui, dans les deux positions du poussoir (2), s'engage par-dessus la face supérieure du bloc à touches (1).

6. Poste téléphonique mural et de table comportant un combiné posé dans la direction longitudinale, l'appareil de table pouvant être pivoté de 180° et fixé au mur, et le dispositif de sélection de l'appareil mural étant monté en étant pivoté de 180° par rapport à l'appareil de table,
caractérisé en ce que le combiné (10) comporte, au-dessous du récepteur, un dispositif de suspension (3) et que le combiné (10) est situé au-dessus du clavier de sélection constituant le dispositif de sélection et qui peut être bloqué par un premier insert encliquetable (8) ou un second insert encliquetable (9), la face supérieure du premier insert encliquetable (8) se terminant de niveau avec la face supérieure du boîtier de l'appareil, tandis que le second insert encliquetable (9) comporte un bec (4) qui s'engage dans la fente (3) du combiné (10).

7. Poste téléphonique murable et de table selon la revendication 6, caractérisé en ce que le premier insert encliquetable (8) et le second insert encliquetable (9) possèdent un bec (7) qui s'engage par-dessus la face supérieure du bloc de sélection à touches (1).

Fig. 1a

Fig. 1b

Fig. 2

Fig. 3

Fig. 5

10

3

Fig. 4